# EUROPEAN PATENT APPLICATION

(11) **EP 2 020 824 A2**
(43) Date of publication of application: **04.02.2009**
(21) Application number: 08160917.4
(22) Date of filing: 22.07.2008
(51) Int. Cl.: H04W 36/14

(54) **Revision level notification method and system for mobile station**

(30) Priority: 03.08.2007 KR 20070078114
(71) Applicant: Samsung Electronics Co., Ltd., Suwon-si, Gyeonggi-Do (KR)
(72) Inventor: Ryu, Dong Won Samsung Electronics Co., Ltd, Gyeonggi-do (KR); Lee, Keon Young Samsung Electronics Co., Ltd, Gyeonggi-do (KR)
(74) Representative: Harrison Goddard Foote

(57) **Abstract**

A revision level notification method and system for a mobile station (200) is provided for facilitating a handover between networks of different generations. The revision level notification method for an inter-generation handover includes detecting a handover trigger event for a handover from a first network (100) to a second network (300), setting a protocol version in association with the first network, receiving a classmark enquiry message from the second network, and transmitting a classmark change message containing a revision level (S309) of a mobile station obtained with reference to the protocol version to the second network in response to the classmark enquiry message (S307).

## Description

### BACKGROUND OF THE INVENTION

### 1. Field of the Invention:

The present invention relates to a mobile station. More particularly, the present invention relates to a revision level notification method and system for a mobile station that is capable of facilitating a handover between networks of different generations.

### 2. Description of the Related Art:

With the rapid evolution of mobile communication technologies, various generations of mobile communication networks have been deployed. That is, the recent mobile communication environment is characterized in that the 2^{nd}, 2.5^{nd}, and 3^{rd} generation networks coexist geographically.

In order to manage such an evolutionary complexity, multimode mobile stations are developed for supporting 2G and 3G communication services. A multimode mobile station enables communication with different mobile communication systems.

Since the 3G mobile communication systems are at the beginning of their introduction, their service coverage is limited and overlapped with the 2G mobile communication service areas. For this reason, when the multimode mobile station, while being served by a 3G network, moves out of the 3G network area, its control should be handed over to a 2G network. Also, when the mobile station moves into a 3G network service area while being served by a 2G network, it may attempt to handover to the 3G network.

When a handover is required to a 2G network, the mobile station transmits revision level information supported by the 2G network. The revision level of the 2G network is acquired from a system information message transmitted by the 2G network.

In a case where the 2G network supports a revision level higher than that of the mobile station, the mobile station transmits its revision level to the 2G network. However, if the revision level of the 2G network is lower than the revision level of the mobile station, the mobile station transmits a revision level indication corresponding to the revision level of the 2G network. This means that the mobile station transmits the highest of its revision levels that can be supported by the 2G network.

However, this conventional revision level informing method has a drawback in that, when the mobile station transmits a revision level which is lower than the mobile stations highest one to the 2G network, the 2G network regards the received revision level as the highest revision level of the mobile station. Accordingly, even when a handover back to the 3G network is possible, the 2G network does not initiate a handover to the 3G network, i.e. there is no transmission of a Handover Command to the mobile station. That is, the 2G network has no information on the highest revision level of the mobile station and therefore the 2G network ignores a handover trigger event even though the mobile station can be served by the 3G network. As a result there may be an unexpected cut-off of an ongoing service.

### SUMMARY OF THE INVENTION

An aspect of the present invention is to address at least the above-mentioned problems and/or disadvantages and to provide at least the advantages described below. Accordingly, an aspect of the present invention is to provide a revision level notification method and system for a mobile station that is capable of facilitating a handover between networks of different generations.

Another aspect of the present invention is to provide a revision level notification method and system for a mobile station that enables fast handover of the mobile station between networks of different generations by notifying a 2G network of the highest revision level supported by the mobile station during a handover from a 3G network to the 2G network.

A further aspect of the present invention is to provide a revision level notification method and system for a mobile station that is capable of notifying a revision level supported by the mobile station to a 2G network through an information update message during a handover from a 3G network to the 2G network.

Yet another aspect of the present invention is to provide a revision level notification method and system for a mobile station that is capable of notifying the revision level supported by the mobile station by setting a specific flag during a handover from a 3G network to the 2G network and transmitting a value of the flag to the 2G network through an information update message.

In accordance with an aspect of the present invention, a revision level notification method for an inter-generation handover of a mobile station is provided. The method includes detecting a handover trigger event for a handover from a first network to a second network, setting a protocol version in association with the first network, receiving a classmark enquiry message from the second network, and transmitting a classmark change message containing a revision level of a mobile station obtained with reference to the protocol version to the second network in response to the classmark enquiry message.

In accordance with another aspect of the present invention, an inter-generation handover method for a mobile station is provided. The method includes setting a flag indicating that a mobile station is being served by a first network with a high revision level, transmitting, after performing a handover to a second network, a classmark change message containing the revision level of the mobile station to the second network, determining, when a handover to the first network is requested, whether the mobile station supports the first network on the basis of the revision level, and performing the handover when the mobile station supports the first network.

In accordance with still another aspect of the present invention, an inter-generation handover method for a mobile station is provided. The method includes receiving a service from a second network after a mobile station has performed a handover from a first network to the second network, requesting a handover from the second network to the first network while being served by the second network, determining, at the second network, whether the mobile station supports the first network with reference to a revision level provided by the mobile station, and performing, when the mobile station supports the first network, the handover from the second network to the first network.

In accordance with yet another aspect of the present invention, an inter-generation handover system is provided. The system includes a mobile station for setting version information for identifying a revision level when camping on a first network and for transmitting the revision level to a second network through a classmark change message, and the second network for determining the revision level of the mobile station obtained from the classmark change message and for performing a handover to the first network on the basis of the revision level.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG. 1 is a conceptual diagram illustrating a mobile communication system including networks of different generations;

FIG. 2 is a block diagram illustrating a configuration of a mobile station according to an exemplary embodiment of the present invention;

FIG. 3 is a message flow diagram illustrating a revision level notification method and system according to an exemplary embodiment of the present invention;

FIG. 4 is a flowchart illustrating a revision level notification method according to an exemplary embodiment of the present invention; and

FIG. 5 is a flowchart illustrating a revision level notification method according to an exemplary embodiment of the present invention in view of a handover target network.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and phrases used in the specification and appended claims are provided to enable a clear and consistent understanding of the detailed description and the claims. Unless otherwise noted, the terms and phrases are to be understood according to conventional usage by those skilled in the relevant art. While the invention is shown and described with reference to certain exemplary embodiments thereof, it will be understood by those skilled in the art that various changes in form and details may be made therein without departing from the spirit and scope of the invention as defined by the appended claims and their equivilants.

In the following description, a revision level notification method and system is provided for an efficient handover mechanism in a heterogeneous network environment. More particularly, a revision level notification method and system is proposed for facilitating handover between 2G and 3G networks in a heterogeneous network environment.

In the following exemplary embodiment, a highest revision level supported by a mobile station is notified to a handover target network through a Classmark change message which is transmitted by the mobile station during an inter-generation handover.

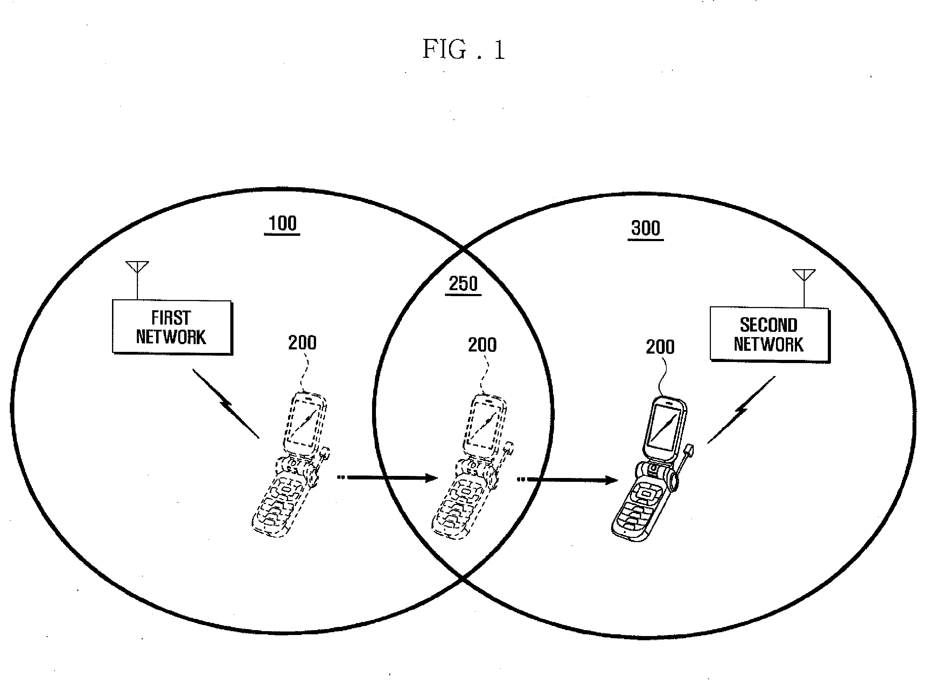

FIG. 1 is a conceptual diagram illustrating a mobile communication system including networks of different generations.

Referring to FIG. 1, the mobile communication system includes a first network 100, a second network 300, and a mobile station 200. In this exemplary embodiment, the first network 100 is exemplified as a 3G network such as Universal Mobile Telecommunications System (UMTS), Wideband Code Division Multiple Access (WCDMA) system and the like, and the second network 300 is exemplified as a 2G network such as Global System for Mobile communications (GSM), Code Division Multiple Access (CDMA) and the like. However, the present invention is not limited to above identified communication systems and can be applied to any two different communication systems.

The mobile station 200 is exemplified as a Dual Band Dual Mode (DBDM) mobile terminal supporting communication with the 3G and 2G networks 100 and 300. However, the present invention is not limited to a DBDM mobile terminal and can be applied to multiband multimode mobile terminals supporting communications with two or more different communication systems. The mobile station 200 may be provided with two modems for separately processing communications with the first and second networks 100 and 300, and may include a common processing unit for integrally controlling the operations of the modems.

The first network 100 includes a Node-B for providing radio access service to the mobile station 200, a Radio Network Controller (RNC) for controlling the Node-B, and a Mobile Switching Center (MSC) connected to the RNC for switching communications to and from the mobile station 200.

The second network 300 includes a base station (BS) for providing radio access service to the mobile station 200, a Base Station Controller (BSC) for controlling the BS, and a switch connected to the BSC for switching communications to and from the mobile station 200.

The mobile station 200 measures signal strength on radio channels associated with the Node-B (hereinafter, referred to as a Base Station (BS) and used interchangeably with network) of the first network 100 and neighbor BSs periodically and reports the received signal strength to the first network 100. When it is determined that the received signal strength of the first network 100 is less than a preset threshold value, a handover of the mobile station 200 to the second network 300 is initiated based on a normal handover procedure according to a specific communication protocol. At this time, the handover can be initiated by the mobile station 200, the first network 100 or the second network 300.

In a case where the mobile station 200 moves into an overlapping area 250 of the first and second networks 100 and 300 while being associated with and served by the first network 100, a handover to the second network 300 may be initiated. At this time, the handover can be initiated by the mobile station 200 or the first network 100. If the handover is initiated, the mobile station 200 establishes a connection with the second network 300 before breaking the connection with the first network 100 for maintaining seamless service.

Of course, the mobile station 200 performs a handover from the second network 300 to the first network 100 while being served by the second network 300 in the same manner.

In order to facilitate the handover between the first and second networks 100 and 300, the mobile station notifies a handover target network of its revision level. Before transmitting the revision level supported by the mobile station, the revision level of the network has to be acquired. The revision level of a network is acquired as follows.

Once the mobile station powers on, it receives system information message from the network and acquires the revision level of the network by checking a specific bit of the system information message, e.g. SI3 (MSCR) bit or SI13 (SGSNR) bit. With reference to the revision level of the network, the mobile station transmits an information change message carrying the revision level supported by the mobile station to the network. Hereinafter the information change message, for example, is explained as a classmark change message.

In a case that the revision level of the network is lower than that of the mobile station, the mobile station sets a revision level indicator of the classmark change message to indicate the low revision level supported by the network. Meanwhile, if the revision level of the network is higher than that of the mobile station, the mobile station sets the revision level indicator of the classmark change message to indicate its highest revision level. With reference to the revision level indicator, the network provides services appropriate for the capability of the mobile station. In this manner, the mobile station and network communicates using the same revision level.

When the mobile station 200 performs a handover from the 3G network 100 to the 2G network 300 while being served by the 3G network 100, it transmits a revision level indicator set to a revision level (e.g., R98 or older) that is lower than its highest revision level in order to match the revision level of the 2G network 300. In this case, the 2G network 300 determines that the mobile station 200 does not support the high revision level (e.g., R99 or later). Accordingly, in spite of receipt of a handover request message, the 2G network 300 does not transmit a Handover command message to the mobile station 200.

This causes a handover failure from the 2G network 300 to the 3G network 100 even though the mobile station 200 supports the revision level of the 3G network 100, resulting in a cutoff of an ongoing service, such as voice and data packet services.

In the following exemplary embodiments, an improved revision level notification method is proposed to address such problems.

While the mobile station supporting the high revision level (e.g., R99 or later) is camped on the 3G network, it can be served by the 3G network. At the beginning of the receipt of the service, the mobile station sets a flag of a protocol version for indicating its revision level. For example, the mobile station sets the flag to 1 <interRAT_flag=1> and stores the flag value within a memory.

After handover from the 3G network to 2G network, the mobile station transmits the Classmark change message to the 2G network. The Classmark change message carries the flag (interRAT) for indicating the revision level of the mobile station.

Afterward, if the mobile station attempts to handover from the 2G network to the 3G network, the 2G network recognizes that the mobile station supports the services provided by the 3G network on the basis of the revision level transmitted by the mobile station. Thereafter, a handover command is transmitted to the mobile station, resulting in successful handover initiation.

Depending on the system configuration, the mobile station can transmit all revision levels as well as the highest revision level (e.g., R99 or later) such that the mobile station can receive the services provided with all revision levels.

Although the revision level notification method and system is described in association with specific mobile communication systems, the present invention is not limited thereto. For example, the mobile communication systems can be a combination of the mobile communication systems currently deployed and to be developed in the future.

In the exemplary embodiments of the present invention, the mobile station is assumed as a DBDM mobile station that supports at least two different mobile communication systems based on Time Division Multiple Access (TDMA), Frequency Division Multiple Access (FDMA), Code Division Multiple Access (CDMA), Orthogonal Frequency Division Multiple Access (OFDMA) and the like. The mobile station can be any of Portable Multimedia Player (PMP), Moving Picture Experts Group (MPEG) audio layer 3 (MP3) player, Digital broadcast receiver, Personal Digital Assistant (PDA), Smartphone, cellular phone, laptop computer, and their equivalent devices supporting radio communication via the above mentioned mobile communication systems.

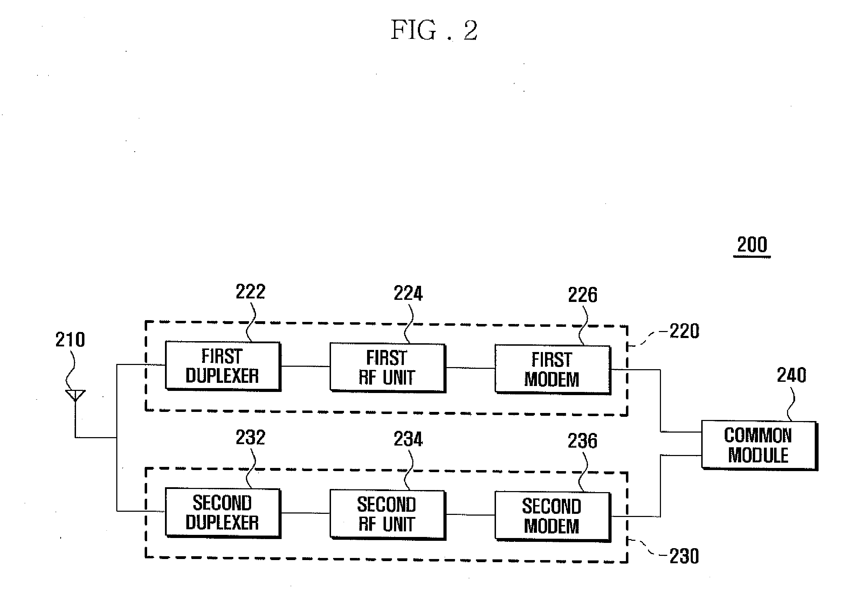

FIG. 2 is a block diagram illustrating a configuration of a mobile station according to an exemplary embodiment of the present invention.

Referring to FIG. 2, the mobile station includes an antenna 210, a first communication module 220 for supporting communication with a 3G network, a second communication module 230 for supporting communication with a 2G network, and a common module 240 for controlling operations of the communication modules.

The antenna 210 can send and receive signals over the frequency bands of the 2G and 3G networks simultaneously. Although a signal antenna is depicted in FIG. 2, the mobile station can be implemented with more than one antenna.

The first communication module 220 includes a first duplexer 222 for separating reception and transmission frequencies of the frequency band of the 3G network, a first Radio Frequency (RF) unit 224 for processing the reception and transmission frequencies, and a first modem 226 for processing the signals received from and to be transmitted to the 3G network according to radio communication protocols specified between the mobile station and the 3G network.

The second communication module 230 includes a second duplexer 232 for separating reception and transmission frequencies of the frequency band of the 3G network, a second radio frequency (RF) unit 234 for processing the reception and transmission frequencies, and a second modem 236 for processing the signals received from and to be transmitted to the 2G network according to radio communication protocols specified between the mobile station and the 2G network.

The common module 240 controls the first and second communication modules 220 and 230 and general operations of the mobile station 200. The common module 200 includes one or more units (not shown), such as a memory unit, an input/output unit, an application processing unit, a control unit for controlling cooperative signaling among the internal components and the like. More particularly in this exemplary embodiment, the memory unit stores the flag value set for indicating the revision level supported by the mobile station. The control unit processes the messages exchanged with the networks in association with a handover and transmits a Classmark change message carrying information on the revision level of the mobile station to a handover target network after completing the handover.

When an incoming or outgoing communication request is detected, the common module 240 determines the network associated with the communication request and activates a communication module corresponding to the network to establish a connection with the network.

For example, the common module 240 determines whether the network is the 3G network or 2G network and activates one of the communication modules 220 and 230 according to a result of the determination. In a case where the communication events of both the 3G and 2G networks are detected simultaneously, the common module 240 processes the communication events in a preset priority order.

The common module 240 controls the operations of the first and second communication module 220 and 230 in accordance with a status of the communication service of the networks. For this purpose, the common module 240 can be implemented with software modules, i.e. software entities or the like. For example, the common module can be implemented with software entities executed on the control unit. The software entities may be specified for the 3G and 2G networks.

The first and second communication modules 220 and 230 are provided with respective radio interfaces for enabling the mobile station to communication with the 3G and 2G networks.

The mobile station 200 can be implemented with more than two radio interfaces.

The first and second communication modules 220 and 230 can be configured to be activated when the mobile station 200 powers on. Also, the first and second communications modules 220 and 230 can be configured such that one of the two communication modules 220 and 230 is activated as a default network with a preset preference. In this case, when a connection to the preferred network fails, the second communication module 230 is activated to establish a connection to a corresponding network. As described above, the mobile station 200 can communicate with the 3G and 2G networks simultaneously.

Hereinafter, the operations of the above structured mobile station are described in association with an inter-generation handover. More particularly, the manner in which the revision level of the mobile station is notified to a new network after completion of the inter-generation handover is described below. However, the present invention is not limited to the following description, but can be implemented with changes in the structures and processing steps.

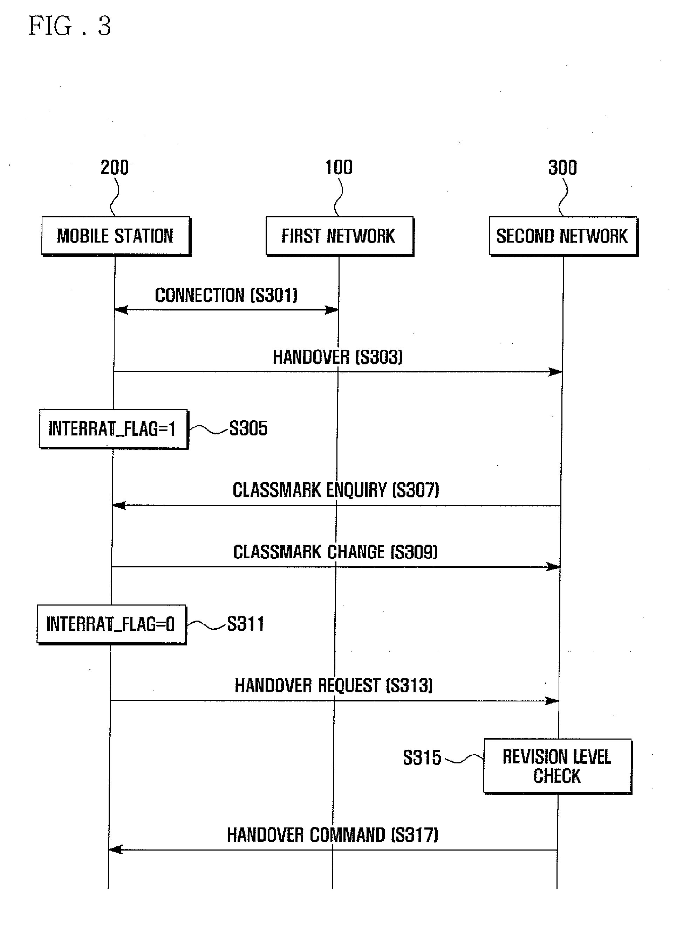

FIG. 3 is a message flow diagram illustrating a revision level notification method and system according to an exemplary embodiment of the present invention. In FIG. 3, the first network 100 is a 3G network, and the second network 300 is a 2G network.

Referring to FIG. 3, the mobile station 200 first camps on the first network 100 to receive services provided by the first network 100 in step S301. The services include voice and data packet services. While being served by the first network 100, the mobile station 200 initiates handover to the second network 300 in step S303. After completing the handover to the second network 300, the mobile station 200 sets network version information supported by itself in step S305. The version information is referred to for setting the revision level carried by the Classmark change message transmitted to the new network after successful handover.

That is, the mobile station 200 uses a flag stored in the memory unit for setting a revision level which it supports. The mobile station 200 may use "interRAT_flag". When the handover is performed from the 3G network to the 2G network, the mobile station sets the interRAT_flag to 1 and notifies the new network that it supports a higher version of a network protocol by setting the revision level carried by the Classmark change message with reference to the value of the interRAT_flag.

Although it is depicted that the interRAT_flag is set after the completion of a handover, the present invention is not limited thereto. For example, the interRAT_flag can be set at a time when the mobile station camps onto the first network 100.

After completing the handover, the second network 300 transmits an information enquiry message to the mobile station 200 for requesting the information on the revision level supported by the mobile station 200 in step S307. The information enquiry message is transmitted for determining networks supported by the mobile station 200. Hereinafter the information enquiry message, for example, is explained as a classmark enquiry message.

Upon receipt of the Classmark enquiry message, the mobile station 200 determines the value of interRAT_flag=1 stored in the memory, generates a Classmark change message in which the revision level is set with reference to the interRAT_flag, and transmits the Classmark change message to the second network 300 in step S309. In this exemplary embodiment, the value "1" of the interRAT_flag indicates that the mobile station supports a high version of a communication protocol.

After transmitting the Classmark change message, the mobile station 200 resets the protocol version information. That is the mobile station 200 resets the value of interRAT_flag to 0 (interRAT_flag=0) in step S311. The protocol version information is updated whenever the mobile station 200 performs a handover.

If the mobile station 200 detects a handover trigger event to the first network 100 while being served by the second network 300, it transmits a handover request message to the second network 300 in step S313.

Upon receipt of the handover request message, the second network 300 determines the revision level of the mobile station in step S315. At this time, the revision level of the mobile station is obtained through the Classmark change message received at step S309. The second network 300 recognizes that the mobile station 200 supports the first network 100 with reference to the revision level of the mobile station 200, thereby transmitting a handover command message to the mobile station 200 in step S317. In this manner, the revision level notification method according to this exemplary embodiment enables the mobile station to perform the seamless handover between the 3G and 2G networks.

That is, when the mobile station 200 performs a handover from a 3G network to a 2G network, it records the handover log and correctly notifies the 2G network of its revision level when requested to transmit its revision level. The mobile station can be configured to transmit its highest revision level or all the revision levels which it supports.

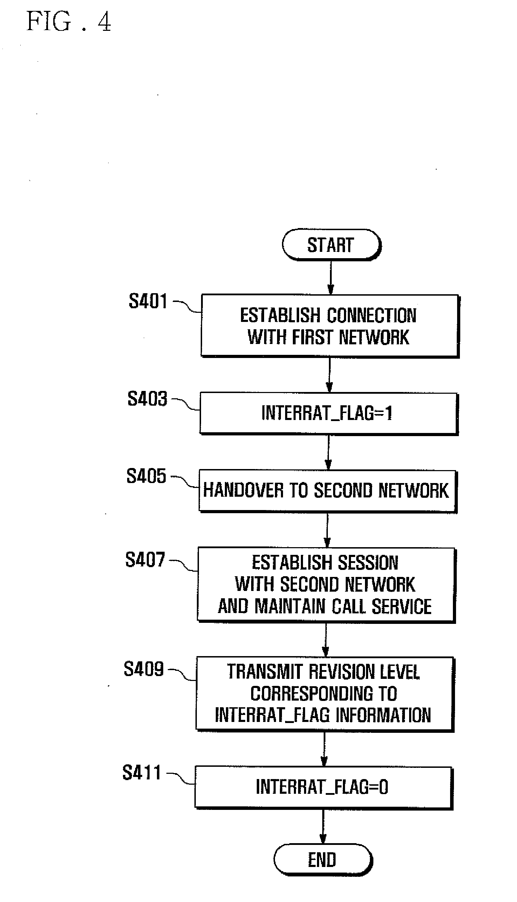

FIG. 4 is a flowchart illustrating a revision level notification method according to an exemplary embodiment of the present invention.

Referring to FIG. 4, the mobile station first connects to the first network (3G network) and establishes a communication connection in step S401. If a handover to a second network (2G network) is detected while being served by the first network, the mobile station sets interRAT_flag to 1 in step S403. Also, the interRAT_flag can be set when the mobile station camps on the first network. Next, the mobile station performs the handover to the second network in step S405 and establishes a session with the second network to maintain seamless service in step S407.

The mobile station generates a Classmark change message in which the revision level of the mobile station is set with reference to the interRAT_flag and transmits the Classmark change message to the second network in response to the Classmark enquiry message in step S409. After transmitting the Classmark change message, the mobile station resets the interRAT_flag to 0 in step S411.

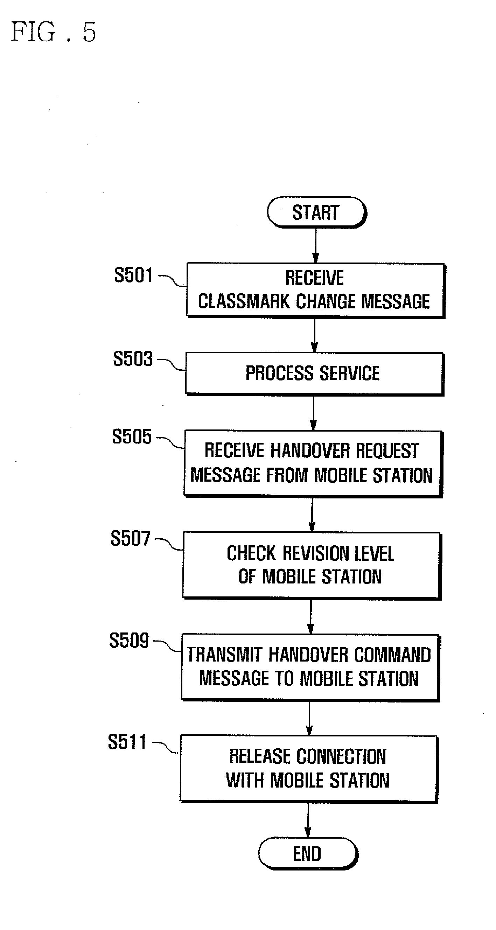

FIG. 5 is a flowchart illustrating a revision level notification method according to an exemplary embodiment of the present invention in view of a handover target network.

Referring to FIG. 5, a handover target network (second network) receives a Classmark change message from the mobile station in response to a Classmark enquiry message in step S501. Next, the second network processes the communication service for the mobile station in step S503. Next, the second network receives a handover request message from the mobile station in step S505 and determines the revision level of the mobile station obtained from the Classmark change message in step S507.

Next, the second network recognizes that the mobile station supports the network (first network) to which the mobile station performs handover with reference to the revision level and transmits a handover command message to the mobile station in step S509. After transmitting the handover command message, the second network releases the connection with the mobile station in step S511.

While the invention has been shown and described with reference to certain exemplary embodiments thereof, it will be understood by those skilled in the art that various changes in form and details may be made therein without departing from the spirit and scope of the present invention, as defined by the appended claims and their equivalents.

As described above, the revision level notification method and system of the present invention enables seamless inter-generation handover. During a handover from a 3G network to a 2G network, the mobile station correctly transmits its revision level to the 2G network, thereby improving reliability of inter-generation handover.

Also, the revision level notification method and system of exemplary embodiments of the present invention enable a mobile station to transmit information on its revision level to a handover target network through a Classmark change message.

Also, the revision level notification method and system of the present invention enables a 2G network serving a mobile station to correctly detect a handover trigger event to a 3G network with reference to the revision level provided by the mobile station, thereby transmitting a handover command message to the mobile station to initiate the inter-generation handover.

Also, the revision level notification method and system of the present invention enables a handover from a network operating with a low version of a communication protocol to a network operating with a high version of communication such that a mobile station can receive a seamless communication service.

## Claims

1. A revision level notification method for an inter-generation handover of a mobile station, the method comprising:
performing a handover from a first network to a second network, the first and second networks being different from each other in generation;
receiving a information enquiry message from the second network; and
transmitting an information change message containing a revision level of a mobile station obtained with reference to version information of the first network to the second network in response to the information enquiry message.

2. The method of claim 1, further comprising:
detecting a handover from the second network to the first network while being served by the second network;
transmitting a handover request message from the mobile station to the second network; and
transmitting a handover command message from the second network to the mobile station with reverence to the revision level of the mobile station.

3. The method of claim 2, wherein the handover command message is transmitted to the mobile station when the mobile station is determined to have a capability to support the first network on the basis of the revision level.

4. The method of any of claims 1 and 2, wherein the version information comprises a flag value referred to by the mobile station when transmitting the information change message for setting the revision level of the information change message.

5. The method of any of claims 1 to 3, wherein the information enquiry message comprises a classmark enquiry message and the information change message comprises a classmark change message.

6. The method of any of claims 1 to 5, wherein the first network has a revision level higher than that of the second network.

7. The method of any of claims 1 and 4, wherein the version information is set when the mobile station camps on the first network.

8. The method of any of claims 1 and 4, wherein the version information is set when the mobile station performs the handover to the second network.

9. The method of any of claims 1 and 2, further comprising storing the version information as a flag value which is referred to for setting the revision level.

10. The method of any of claims 1 and 5, wherein the information change message carries all revision levels supported by the mobile station.

11. The method of any of claims 1 and 5, wherein the transmitting of an information change message comprises resetting the version information.

12. An inter-generation handover system, the system comprising:
a first network for providing a radio access service to a mobile station;
a second network which differs from the first network in generation, for transmitting an information request message to the mobile station for requesting version information when the mobile station is associated, for receiving an information change message from the mobile station in response to the information request message, the information change message comprising the revision level of the mobile station, and for determining whether to transmit, in response to a handover request message transmitted by the mobile station, a handover command to the mobile station on the basis of a value of the revision level; and
a mobile station for performing a handover to the second network while being served by the first network and for transmitting the information change message to the second network in response to the information enquiry message transmitted by the second network, the information change message comprising the revision level determined with reference to the version information.

13. The system of claim 12, wherein the version information is set when the mobile station camps on the first network.

14. The system of claim 12, wherein the version information is set when the mobile station performs the handover from the first network to the second network.

15. The system of any of claims 12 to 14, wherein the mobile station performs the handover from the second network to the first network upon receipt of the handover command message from the second network.
